# EUROPEAN PATENT SPECIFICATION

(11) **EP 1 206 639 B1**
(45) Date of publication and mention of the grant of the patent: **09.03.2005**
(21) Application number: 00942156.1
(22) Date of filing: 27.06.2000
(51) Int. Cl.: F04B 7/06, F04C 18/00

(54) **METHOD FOR FEEDING PARTICULATE MATTER**
VERFAHREN ZUM ZUFÜHREN VON FESTSTOFF
PROCEDE D'ALIMENTATION DE MATIERE PARTICULAIRE

(30) Priority: 28.06.1999 FI 991461
(43) Date of publication of application: 22.05.2002
(73) Proprietor: Borealis Technology OY, 06150 Porvoo (FI)
(72) Inventor: NYFORS, Klaus, FIN-06150 Porvoo (FI); KORHONEN, Esa, FIN-06400 Porvoo (FI); LESKINEN, Pauli, FIN-00640 Helsinki (FI)
(74) Representative: Heikkinen, Esko Juhani
(86) International application number: PCT/FI2000/000576
(87) International publication number: WO 2001/025633

(56) References cited:
- EP-A2- 0 512 688
- WO-A1-92/16747
- DE-A1- 4 228 498
- US-A- 5 024 588
- US-A- 5 580 227

## Description

### Field of the invention

The present invention relates to a method and equipment for feeding particulate matter into a pressurized vessel such as a process reactor. The invention can be used for example for feeding solid catalysts into a polymerization reactor.

### Background of the invention

In various processes it is necessary to feed particulate matter into a pressurized vessel. This can be done pneumatically by using pressurized carrier gas, but in practice it is difficult to achieve satisfactory accuracy in this way. Gas-solid suspensions are also difficult to handle because they are highly abrasive. The concentration of the the particulate material in such suspensions should also be relatively low in order to avoid blocking.

The particulate material to be fed may be first suspended into a liquid. The transport of such liquid suspension is easier and also more reliable. Also dosing is more accurate. However, the solid material tends to precipitate from the suspension and form blocks. This can be avoided by using a highly viscous medium such as oil or wax as the liquid medium. However, reliable and accurate dosing of such suspensions is also difficult.

FI-A-911388 describes a method for feeding a polymerization catalyst into a polymerization reactor. The catalyst is first mixed with wax and then transported into the reactor with a special dosing pump. The pump comprises a reciprocating piston and surrounding it a rotating cylinder with a transport opening on the surface of the cylinder. In the suction phase of the piston, the opening is connected with the mixing chamber for transporting the catalyst-wax mixture into the pump chamber. In the discharge phase, the opening of the cylinder is connected with the reactor. EP-512 688 describes a specific type of a valveless rotary piston pump. The pump is especially meant to be used in medical dialysis processes.

### General description of the invention

Now a method and equipment according to the independent claims have been invented. Some preferable embodiments of the invention are defined in the other claims.

According to the invention, the particulate matter to be fed is first mixed with a carrier liquid, and the mixture is fed into the pressurized process pipe or vessel with a valveless rotary piston pump. Such a pump comprises a reciprocating and rotating piston having at the end a hollow with a radial opening on the surface of the piston. In the suction phase of the piston, the hollow is connected with the storage vessel, and in the discharge phase with the pressurized vessel.

The mixture prepared may be stored in a storage vessel. The storage vessel is preferably a cylinder with a piston that is arranged to move slowly. The mixture is sucked into the cylinder from mixing vessel and pressed from the cylinder to the pump by means of the piston.

In accordance with the invention, the particulate matter can be dosed very accurately and reliably. Further, longer interval between maintenance can be achieved. The pump is, however, simpler than e.g. in the method of FI-A-911388 mentioned above, and it is less expensive to manufacture. Further, the design of the pump of FI-A-911388 has more leaking surfaces and seals, which can be avoided by using the design of the pump described in this application.

### Brief description of the drawings

The enclosed drawings form a part of the written description and show examples of using the invention.
- Figure 1 shows a valveless rotary piston pump that can be used in the invention.
- Figure 2 shows schematically a feeding system in accordance with the invention as connected to a gas phase reactor.
- Figure 3 shows schematically a feeding system in accordance with the invention as connected to a loop reactor.

### Detailed description of the invention

The liquid medium used for the particulate matter is preferably inert towards the particulate material itself. The medium is preferably inert also towards other substances possibly present in the pressurized vessel. Especially, when the mixture is fed into a reactor, it is preferably inert towards the reacting substances.

The liquid medium has preferably such a high viscosity that the particulate material does not easily settle or sedimentate from the mixture. The viscosity at storage or pumping temperature (-20 °C to 100 °C) may be for example 4 to 20 Pas, typically 6 to 12 Pas, and especially 8 to 10 Pas.

The liquid medium may be for example oil or wax, such as a poly-α-olefin oil or wax. The medium may be also a mixture of wax in oil with lower viscosity.

The mixture may contain suitable additives for example in order to increase physical stability of the mixture or to achieve desired rheological properties.

The concentration of the particulate material in the mixture may be for example 1 to 500 g/dm³, preferably 10 to 400 g/dm³.

The particulate material may form agglomerates in the mixture. Such agglomerates may be removed from the mixture. This can be done by filtering the mixture at a suitable stage, preferably before transporting it to the pump. The filter is preferably located in front of the pump, since the agglomerates may cause disturbancies in the operation of the pump, or they may even break down the pump. Furthermore, if the particulate material to be pumped is a polymerization catalyst, its structure may break and it may loose its activity.

The pressurized vessel may be especially a process reactor, such as a gas phase reactor (like a fluidized bed reactor), a loop reactor, or an elongated plug flow reactor. The pressure in the polymerization reactor is typically in the range between 1 to 100 bar, preferably 40 to 60 bar.

The particulate material may be especially a catalyst, such as a catalyst or catalyst mixture used in an olefin polymerization reaction. The olefin is especially α-olefin, such as propene or ethene. The catalyst may be for example of Ziegler-Natta or single site catalyst type.

The catalyst and liquid medium may be e.g. such as described in FI-A-925915 (corresponding to EP-A-607 703, which document is incorporated as a reference herein).

The storage cylinder preferably comprises a pneumatically or hydraulically driven piston. Especially an inert fluid is used. The fluid is preferably a gas or mixture of gases. Especially nitrogen can be used. The piston of the cylinder may be rodless. The feeding pressure from the cylinder to the pump is preferably from 0.1 to 20 bar.

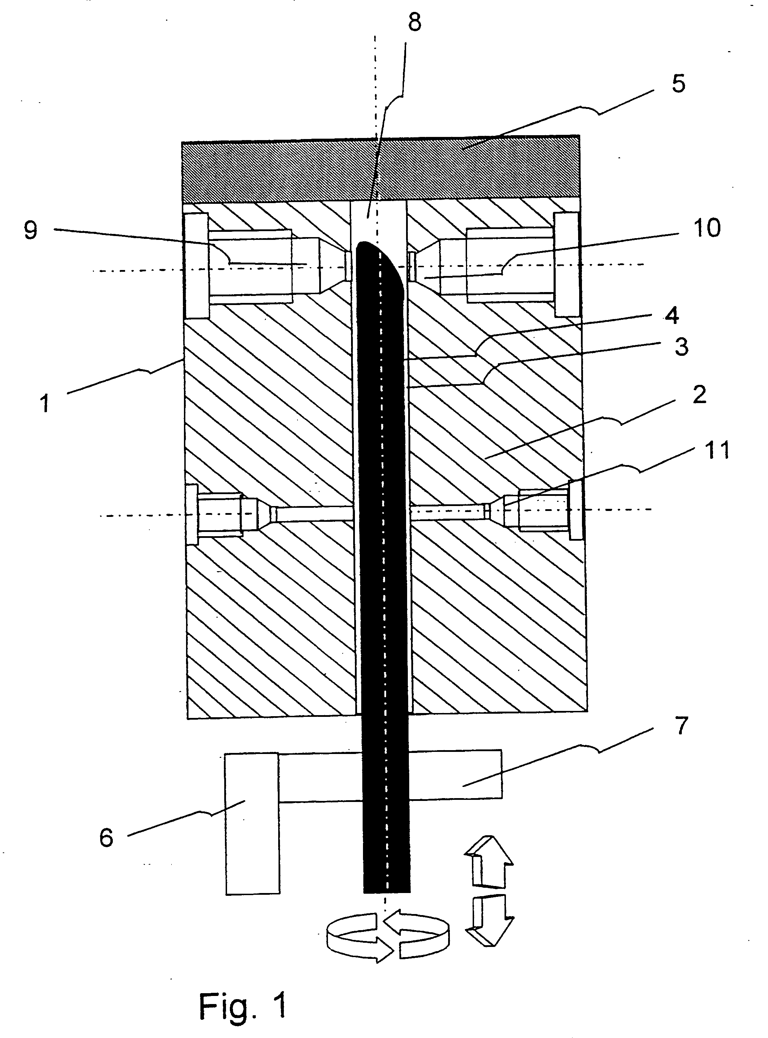

The valveless pump 1 according to Fig. 1 comprises a body 2, inside it a circular cylinder 3, and a piston 4 fitted in the cylinder. The upper end of the cylinder is closed with a bottom 5. The lower end of the piston extends out of the cylinder and is provided with a reciprocating mechanism 6 and rotating mechanism 7.

At the upper end of the piston 4 there is a hollow cavity 8 and on one side of the hollow cavity an opening to the surface of the piston. The upper end of the cylinder 3 is provided with a radial inlet opening 9 connected to a storage vessel containing the mixture to be dosed. The opposite side of the cylinder is provided with a radial outlet opening 10 connected to a pressurized vessel into which the mixture is to be dosed.

The piston 4 is sealed to the cylinder 3 with a fluid sealing ring system 11.

When the piston 4 is in its upper position, the open side of the hollow cavity 8 is towards the inlet opening 9 of the cylinder. The back wall of the hollow cavity opposite to the open side covers the outlet opening 10. When the piston starts moving downwards, the mixture is drawn into the cylinder through the inlet opening. When the piston reaches its lower position, the open side of the hollow has been rotated away from the inlet opening so that the inlet opening is closed by the back wall of the hollow. When the piston now starts moving upwards, the piston rotates further and the open side of the piston hollow comes in contact with the outlet opening and the mixture is forced out of the cylinder through the outlet opening.

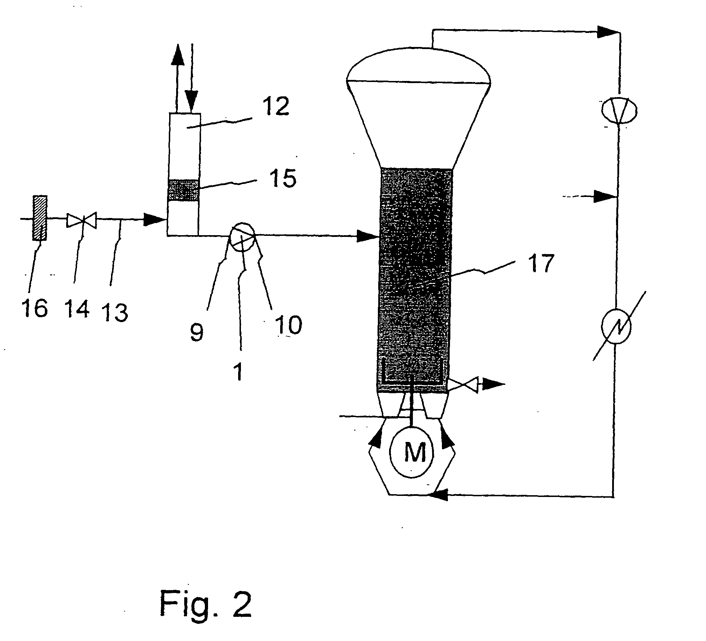

According to Fig. 2, the inlet opening 9 of the pump 1 is connected to one end of a storage cylinder 12. Line 13 provided with a valve 14 connects this end of the cylinder also to a mixing vessel, in which a catalyst mixture to be fed is prepared. The cylinder is provided with a slowly moving piston 15. The pump 1 is preferably disposed in the horizontal position.

The catalyst mixture contains solid catalyst dispersed in wax.

When the mixture is charged into the storage cylinder 12, the valve 14 of the line 13 is opened and the piston 15 is moved upwards so that the mixture is drawn into the cylinder. Thereafter the valve is closed. When the mixture is dosed by the pump 1, the piston is moved downwards in the cylinder.

The line 13 is also provided with a filter 16. Suitable screen size may be 0.2 to 5 mm, preferably 0.5 to 2 mm. The filter is preferably before the valve 14.

For moving the piston 15, the upper end of the cylinder 12 may be connected to a compressor mechanism by which fluid can be pressed into the cylinder or drawn out of it. The fluid is preferably inert so that leakage to the lower end of the cylinder does not affect adversely the mixture or later steps of the process. The fluid is preferably gas, such as nitrogen. The piston may be rodless.

The catalyst mixture is dosed by the valveless rotating piston pump 1 into a fluidized bed polymerization reactor 17. The fluidized bed is formed by polymer particles and by the gas phase of the reactor circulated from the top to bottom of the reactor. The gas phase is formed by unreacted monomers. The circulated gas flow may also be cooled. Additional gas is fed into the reactor together with the circulated gas. Polymer particles are removed from the side or bottom of the reactor. The fluidized bed may be also mixed by a rotating mixer.

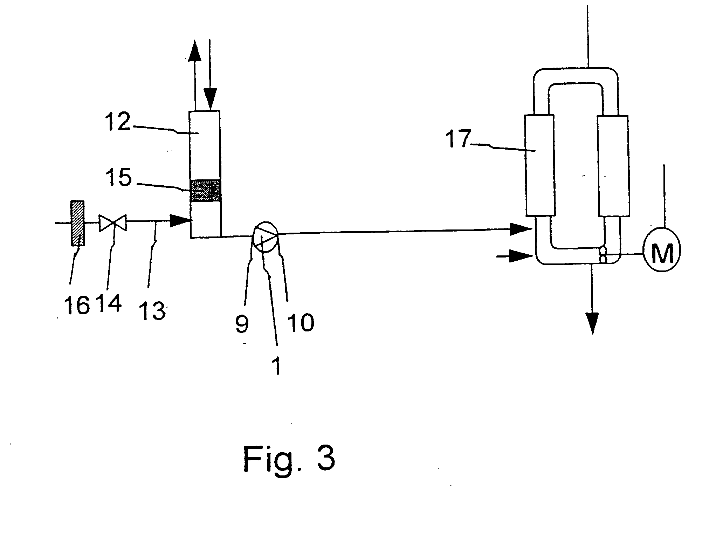

According to Fig 3, a similar feeding system is used but the catalyst mixture is dosed into a bulk, e.g. a loop reactor 17. A suitable liquid medium is used as a reaction medium. The reactor is provided with suitable means for feeding monomers into the reactor and removing polymer particles out of the reactor. The reactor is also provided with suitable means for circulating the reaction mixture. The jacket of the reactor may be suitably cooled.

The above processes can be used for example for polymerizing ethylene, or α-olefins, especially propylene.

The above processes may also be combined so that the bulk reactor process is used as a first step and the fluidized bed reactor process as a second step. The catalyst mixture needed in both steps may be the same or different type of catalyst and may be dosed to the first step or to both steps.

## Claims

1. A method for feeding particulate material into a pressurized process pipe or vessel (17), in which method the particulate material is mixed with a viscous liquid medium, the viscosity of which is 4 to 20 Pas, and dosed by a pump into the pressurized process pipe or vessel, **characterized in that** the mixture of the particulate material and liquid medium is dosed into the pressurized process pipe or vessel (17) by means of a feeding system comprising a valveless rotary piston pump (1).

2. A method according to claim 1, wherein the mixture to be dosed is prepared in a mixing vessel, then transported into a storage vessel (12), and from the storage vessel to the pump (1).

3. A method according to claim 2, wherein the storage vessel is a cylinder (12) provided with a piston (15) that is arranged to move slowly, whereby the mixture is sucked into one end of the storage cylinder by pulling the piston towards the other end of the cylinder, and pressed out from the cylinder to the pump (1) by pushing the piston towards the first end of the cylinder.

4. A method according to claim 3, wherein the piston (15) of the storage cylinder (12) is pushed towards the first end of the cylinder by pressing fluid into the cylinder through the second end of the cylinder, and wherein the piston is pulled towards the second end of the cylinder by sucking fluid from the cylinder through the second end, or by letting the second end depressurize.

5. A method according to claim 4, wherein the fluid is a gas, preferably an inert gas such as nitrogen.

6. A method according to any of claims 1 to 5, wherein the viscosity of the liquid medium is 6 to 12 Pas, preferably 8 to 10 Pas.

7. A method according to any of claims 1 to 6, wherein the particulate material comprises a catalyst, such as a polymerization catalyst.

8. A method according to any of claims 1 to 7, wherein the pressurized vessel is a reactor (17), such as a polymerization reactor.

9. A method according to any of claims 1 to 8, wherein the pressure in the process pipe or vessel (17) is 1 to 100 bar, preferably 40 to 60 bar.

10. A method according to any of claims 1 to 9, wherein the concentration of the particulate matter is 1 to 500 g/dm³, preferably 10 to 400 g/dm³.

11. A method according to any of claims 1 to 10, wherein the piston (4) of the pump (1) is sealed to the cylinder (3) of the pump (1) with a fluid sealing ring system (11).

12. A method according to any of claims 1 to 11, wherein the cylinder (3) of the pump (1) is closed with a bottom (5).

13. Equipment for dosing the mixture of particulate material and viscous liquid medium, the viscosity of which is 4 to 20 Pas, into a pressurized process pipe or vessel, comprising a storage vessel (12), and a pump for dosing the mixture into the pressurized process pipe or vessel, **characterized in that** the pump is a valveless rotary piston pump (1).

## Patentansprüche

1. Verfahren zum Zuführen eines partikelförmigen Materials in ein Prozeßdruckrohr oder -gefäß (17), wobei das partikelförmige Material bei diesem Verfahren mit einem viskosen flüssigen Medium gemischt wird, dessen Viskosität 4 bis 20 Pa·s beträgt, und mit einer Pumpe in das Prozeßdruckrohr oder -gefäß dosiert wird, **dadurch gekennzeichnet, daß** das Gemisch aus dem partikelförmigen Material und flüssigem Medium mittels eines Beschickungssystems, das eine ventillose Drehkolbenpumpe (1) umfaßt, in das Prozeßdruckrohr oder -gefäß (17) dosiert wird.

2. Verfahren nach Anspruch 1, wobei das zu dosierende Gemisch in einem Mischgefäß hergestellt wird, dann in ein Speichergefäß (12) und aus dem Speichergefäß zu einer Pumpe (1) transportiert wird.

3. Verfahren nach Anspruch 2, wobei das Speichergefäß ein Zylinder (12) ist, der mit einem Kolben (15) ausgestattet ist, der so angeordnet ist, daß er sich langsam bewegt, wobei das Gemisch in ein Ende des Speicherzylinders gesaugt wird, wenn der Kolben zum anderen Ende des Zylinders gezogen wird, und aus dem Zylinder zur Pumpe (1) gepreßt wird, wenn der Kolben zum ersten Ende des Zylinders gedrückt wird.

4. Verfahren nach Anspruch 3, wobei der Kolben (15) des Speicherzylinders (12) zum ersten Ende des Zylinders gedrückt wird, indem durch das zweite Ende des Zylinders Fluid in den Zylinder gepreßt wird, und wobei der Kolben zum zweiten Ende des Zylinders gezogen wird, indem durch das zweite Ende Fluid aus dem Zylinder abgesaugt wird oder indem sich der Druck am zweiten Ende abbauen kann.

5. Verfahren nach Anspruch 4, wobei das Fluid ein Gas, vorzugsweise ein Inertgas, wie Stickstoff, ist.

6. Verfahren nach einem der Ansprüche 1 bis 5, wobei die Viskosität des flüssigen Mediums 6 bis 12 Pa·s, vorzugsweise 8 bis 10 Pa·s beträgt.

7. Verfahren nach einem der Ansprüche 1 bis 6, wobei das partikelförmige Material einen Katalysator, wie einen Polymerisationskatalysator, umfaßt.

8. Verfahren nach einem der Ansprüche 1 bis 7, wobei das Druckgefäß ein Reaktor (17), wie ein Polymerisationsreaktor, ist.

9. Verfahren nach einem der Ansprüche 1 bis 8, wobei der Druck im Prozeßrohr oder -gefäß (17) 1 bis 100 bar, vorzugsweise 40 bis 60 bar beträgt.

10. Verfahren nach einem der Ansprüche 1 bis 9, wobei die Konzentration des partikelförmigen Materials 1 bis 500 g/dm³, vorzugsweise 10 bis 400 g/dm³ beträgt.

11. Verfahren nach einem der Ansprüche 1 bis 10, wobei der Kolben (4) der Pumpe (1) mit einem Flüssigkeitsdichtungsringsystem (11) gegenüber den Zylinder (3) der Pumpe (1) abgedichtet ist.

12. Verfahren nach einem der Ansprüche 1 bis 11, wobei der Zylinder (3) der Pumpe (1) mit einem Boden (5) abgedichtet ist.

13. Vorrichtung zum Dosieren des Gemischs aus partikelförmigem Material und viskosem flüssigem Medium, dessen Viskosität 4 bis 20 Pa·s beträgt, in ein Prozeßdruckrohr oder -gefäß, die ein Speichergefäß (12) und eine Pumpe zum Dosieren des Gemischs in das Prozeßdruckrohr oder -gefäß umfaßt, **dadurch gekennzeichnet, daß** die Pumpe eine ventillose Drehkolbenpumpe (1) ist.

## Revendications

1. Procédé pour alimenter de la matière particulaire dans un tuyau ou récipient de traitement pressurisé (17), dans lequel la matière particulaire est mélangée avec un milieu liquide visqueux, dont la viscosité est de 4 à 20 Pa.s, et dosée par une pompe dans le tuyau ou récipient de traitement pressurisé, **caractérisé en ce que** le mélange de la matière particulaire et du milieu liquide est dosé dans le tuyau ou récipient de traitement pressurisé (17) au moyen d'un système d'alimentation comprenant une pompe à piston rotatif sans clapet (1).

2. Procédé selon la revendication 1, dans lequel le mélange devant être dosé est préparé dans un récipient de mélange, puis transporté dans un récipient de stockage (12), et du récipient de stockage vers la pompe (1).

3. Procédé selon la revendication 2, dans lequel le récipient de stockage est un cylindre (12) muni d'un piston (15) qui est agencé pour se déplacer lentement, moyennant quoi le mélange est aspiré dans une extrémité du cylindre de stockage en tirant le piston vers l'autre extrémité du cylindre, et pressé hors du cylindre vers la pompe (1) en poussant le piston vers la première extrémité du cylindre.

4. Procédé selon la revendication 3, dans lequel le piston (15) du cylindre de stockage (12) est poussé vers la première extrémité du cylindre en appuyant sur le fluide dans le cylindre à travers la seconde extrémité du cylindre, et dans lequel le piston est tiré vers la seconde extrémité du cylindre en aspirant le fluide du cylindre à travers la seconde extrémité, ou en laissant la seconde extrémité dépressuriser.

5. Procédé selon la revendication 4, dans lequel le fluide est un gaz, de préférence un gaz inerte tel que l'azote.

6. Procédé selon l'une quelconque des revendications 1 à 5, dans lequel la viscosité du milieu liquide est de 6 à 12 Pa.s, de préférence de 8 à 10 Pa.s.

7. Procédé selon l'une quelconque des revendications 1 à 6, dans lequel la matière particulaire comprend un catalyseur, tel qu'un catalyseur de polymérisation.

8. Procédé selon l'une quelconque des revendications 1 à 7, dans lequel le récipient pressurisé est un réacteur (17), tel qu'un réacteur de polymérisation.

9. Procédé selon l'une quelconque des revendications 1 à 8, dans lequel la pression dans le tuyau ou récipient de traitement (17) est de 1 à 100 bars, de préférence de 40 à 60 bars.

10. Procédé selon l'une quelconque des revendications 1 à 9, dans lequel la concentration de la matière particulaire est de 1 à 500 g/dm³, de préférence de 10 à 400 g/dm³.

11. Procédé selon l'une quelconque des revendications 1 à 10, dans lequel le piston (4) de la pompe (1) est scellé au cylindre (3) de la pompe (1) avec un système d'anneau d'étanchéité aux fluides (11).

12. Procédé selon l'une quelconque des revendications 1 à 11, dans lequel le cylindre (3) de la pompe (1) est fermé avec un fond (5).

13. Dispositif pour doser le mélange de matière particulaire et d'un milieu liquide visqueux, dont la viscosité est de 4 à 20 Pa.s, dans un tuyau ou récipient de traitement pressurisé, comprenant un récipient de stockage (12) et une pompe pour doser le mélange dans le tuyau ou récipient de traitement pressurisé, **caractérisé en ce que** la pompe est une pompe à piston rotatif sans clapet (1).
